# EUROPEAN PATENT APPLICATION

(11) **EP 4 461 526 A1**
(43) Date of publication of application: **13.11.2024**
(21) Application number: 23172241.4
(22) Date of filing: 09.05.2023
(51) Int. Cl.: B32B 7/12, B32B 5/18, B32B 7/023, B32B 7/027, B32B 27/06, B32B 27/08, B32B 27/36, B32B 27/40

(54) **A WALL PANEL**

(71) Applicant: EAUZON, 8670 Oostduinkerke (BE)
(72) Inventor: Callens, Lander Windekind, 8670 Oostduinkerke (BE)
(74) Representative: IP HILLS NV

(57) **Abstract**

A wall panel comprises:
• at least a first foamed layer of foamed polyester having a first and a second surface, and
• at least a first rigid polyester layer having a first and a second surface, the first surface of the at least first foamed layer is glued to the second surface of the at least first rigid layer by a glue, preferably a thermoplastic glue having a melting temperature less than the melting temperatures of the at least first foamed layer and the at least first rigid layer, and
a first visible side provided on the first surface of the at least first rigid layer and being visible at the first outer surface of the wall panel, said first visible side comprising a printed layer.

## Description

### Field of the Invention

The present invention generally relates to wall panels, more particular polymeric wall panels for use in wall construction in humid or wet environments.

### Background of the Invention

Building constructions nowadays are more and more popular. Rooms and whole buildings are constructed from wall panels made remote from the construction site.

Also renovation of existing constructions is more and more popular nowadays.

In new and renovated constructions, rooms are to be constructed with wall panels having the required features, such as light weight, noise, and thermal insulating, easy to handle and shape, resistant to humidity, etc.

Made constructions are more and more made temporarily and need to be taken down after a relatively short period of use. Therefore, recycling of constructions becomes more and more important.

It is known, e.g. from WO2013086021, to provide wall panels from polymeric material, such as recycled polyethylene terephthalate. These wall panels are used in combination with metallic support elements, which makes them not fit for straight forward recycling themselves. They need to be separated into different fractions before the polymer can be recuperated.

From EP4163102, it is known to provide a fully recyclable wall panel from polyester material. However it was found that providing individualised or short series of wall panels, comprising as a decorative element a decoration provided to the backside of the outer layer or layers, is not only expensive, but also may cause quite a large volume of waste. The provision of a polyester outer layer with a decorative element on the backside or frontside of this layer, typically a polyester sheet or film, can only be made in an economically viable way when a large number or length of films or sheets are produced. Hence for short series of individualised wall panels, a significantly large volume of film or sheet is to be made, of which only a small length or amount is used. The rest of the film or sheet needs to be stored for a shorter or longer period, or needs to be disposed or recycled. As such energy and storage capacity, as well as raw materials are consumed unnecessarily.

### Summary of the Invention

It is an object of the present invention to provide an easily recyclable wall panel which may cause less material to be processed, stored and/or wasted.

According to a first independent aspect of the invention, a wall panel is provided. The wall panel comprises:
- at least a first foamed layer of foamed polyester having a first and a second surface, and
- at least a first rigid polyester layer having a first and a second surface, the first surface of the at least first foamed layer is glued to the second surface of the at least first rigid layer by a glue, preferably a thermoplastic glue having a melting temperature less than the melting temperatures of the at least first foamed layer and the at least first rigid layer, and
- a first visible side provided on the first surface of the at least first rigid layer and being visible at the first outer surface of the wall panel, said first visible side comprising a printed layer.

The foamed polyester layer is preferably provided from polyethylene terephthalate (PET) or a coPET, such as rPET. The first foamed layer may be a closed cell foam, an open cell foam of a foam comprising both open cells and closed cells.

In the context of this application, coPET means the copolymer of polyethylene terephthalate with one or more glycols or polyols.

In the context of this application, rPET means recycled PET or coPET. rPET can be obtained from plastic PET (even rPET) bottles, any possible source of PET (even rPET), such as wall panels according to the present invention, which are recycled by known methods, such as comminuting, like grinding, the materials to be recycled into relatively small PET particles, which can be washed end cleaned, removing all non-PET fractions. These small PET particles can be fed to the production apparatus of the layers, typically extruders such as an extruder with a slot-die, to provide the polyester layer from rPET.

The first rigid polyester layer is preferably provided from PET or a coPET. The PET or co-PET may be rPET. The PET or co-PET may be BoPET. BoPET means biaxially-oriented PET. Preferably this first rigid polyester layer is a non-foamed polyester layer. A rigid polyester layer is a polyester layer having a density of more than 1000 kg/m³.

On the first surface of the at least first rigid layer, which surface is visible at the first outer surface of the wall panel a printed layer is provided. This printed layer may be provided by any printing technique which is appropriate to print a design on this surface. As an example, the printed layer may be provided by digital printing, offset printing, transfer printing , like heat or steam transfer printing or pressure transfer printing, thermal printing, UV curing printing, UV gel printing, dye sublimation printing, laser printing, inkjet printing, screen printing, pad printing, relief printing and alike. The printed layer may be provided by one or a plurality of printing steps, optionally using different inks per printing step.

The printed layer may cover the surface of the at least first rigid layer, entirely with ink, or the ink may be provided as isolated zones, e.g. like pixels. Depending on the kind of design and the sharpness of the design, more or less pixels may be used end the number of colours for the pixels may vary, e.g. 4 (e.g. black, yellow, magenta and cyan), or more than 4.

The inks used for such printing step or steps, may e.g. be water based inks, solvent based inks, may be heat curing inks, UV curing inks, and alike. Preferably the inks once printed are water resistant.

The wall panels according to the invention, in particular but not exclusively according to the first aspect of the invention, have the advantage that they can be recycled, even with the provision of an adhesive whose material is different from the polyesters used to provide the different polyester layers. In particularly, the use of thermoplastic glues to bind the layers does not disturb the recycling process used to recycle the wall panels. The use of adhesives with a melting temperature lower as the melting temperature of the polyester layers to be bonded has the advantage that the energy used to melt down the thermoplastic glue is less as compared to melting down the polyester itself to provide self-binding of the polyester layers, and reduces the risk on damage to the polyester layers to be bonded due to the thermal treatment at temperatures above the melting temperature of the polyester used to provide the layers to be bonded. The cellular structure of foamed polyester layers may be influenced, changed, or damaged by adhesives having a temperature at or above the melting temperature of the polyester used to provide the layers to be bonded. The use of thermoplastic glue enables to realize the adhesion of relatively thin layers of polyester, without damaging or discoloring the thin layers. The use of thermoplastic glue enables to use a process to realize the adhesion, for which the process settings are not significantly influenced by the material, the density and dimensions of the layers to be adhered one to the other. For self-bonding, these process parameters need to be tuned in function of the material, the density and dimensions of the layers to be adhered one to the other. The wall panels are self-supporting and have the advantage that the wall panels can be recycled after use easily and without the need to separate various polymeric and other fractions. The presence of a printed layer on one of the sides of the first rigid polyester layer neither has a negative influence on the recyclability of the wall panel. As the printed layer may be printed on the rigid layer itself, there is no need to provide a loo large length of design-carrying films or sheets or alike, which hence avoids the creation of waste.

The wall panels according to the invention, in particular but not exclusively according to the first aspect of the invention, are easily manipulatable due the reduced weight, though rigid and stiff thanks to the first and optionally the second rigid polyester layer, keeping the wall panels shape. The wall panels according to the invention, in particular but not exclusively according to the first aspect of the invention, are water resistant, easy to clean, easy to process and optionally to machine and rather unlikely to give rise to fungus grow when used is wet environments, like bathrooms, showers and kitchens.

Preferably, a thermoplastic glue between the first surface of the at least first foamed layer and the second surface of the at least first rigid layer preferably be thermoplastic polyurethane. In the context of this patent, thermoplastic glues are glues having a melting temperature less than the melting temperatures of the material from which the layers to be bonded are composed, in this case less than the melting temperatures of the at least first foamed layer and the at least first rigid layer. Different as for thermoset glues, which cause the provision of rigid particles during recycling of polyester wall panels in particular, and polyester products in general, the use of said thermoplastic glue allows the recycling of the total wall panel, as the used amount of said thermoplastic glue will not cause a negative influence on the recycling process. Thermoplastic glue is also referred to as thermoplastic adhesive or hot-melt glue or adhesive. In the context of this patent, a thermoplastic glue or adhesive is a thermoplastic glue or adhesive having a melting temperature below surfaces it is to adhere, hence having a melting temperature below the melting temperature of the polyester or polyesters it is to adhere to. The thermoplastic glue may be a non-polyester based glue, i.e. a polyester-free glue. The thermoplastic glue used is preferably thermoplastic polyurethane. The thickness and amount of thermoplastic glue may be in the same ranges as applicable for the thermoplastic glue used to adhere the first foamed layer to the first rigid polyester layers. The amount of glue of the layer of thermoplastic glue may range from 100 to 500 g/m². More preferred, the amount of glue of the layer of thermoplastic glue may range from 150 to 250 g/m². Optionally the adhesive may be provided as a layered structure, this layered structure comprising two sublayers of adhesive at the outer surfaces of the layered structure, and further comprising one or more material layers between these sublayers of adhesive, like a thin film (hence being a double sided adhesive film) or even a layer of acoustically damping material, such as a cork layer.

According to some embodiments, the wall panel further comprises a second rigid polyester layer having a first and a second surface, the second surface of the first foamed layer may be glued to the first surface of the second rigid layer by a glue, preferably a thermoplastic glue, having a melting temperature less than the melting temperatures of the at least first foamed layer and the second rigid layer.

Also this second visible side provided on the second surface of the at least second rigid layer and being visible at the second outer surface of the wall panel, may comprising a printed layer being visible on the second outer surface of the wall panel. This layer may be provided in a similar, identical, or different way as the printed layer on the first visible side provided on the first surface of the at least first rigid layer.

The second rigid polyester layer is preferably PET or a coPET, optionally being rPET. The PET or co-PET may be BoPET. Preferably this second rigid polyester layer is a non-foamed polyester layer.

According to some embodiments of the present invention, the first foamed layer may have a thickness in the range of 2 to 92 mm, such as 4 to 92 mm. More preferred, the foamed layer may have a thickness in the range of 4 to 40mm

According to some embodiments of the present invention, the first foamed layer may have a density in the range of 40 to 500 kg/m³. More preferred, the first foamed layer may have a density in the range of 40 to 350 kg/m³, most preferred in the range of 40 to 160 kg/m³.

The first foamed layer in these embodiments functions as a core layer of a layered wall panel. The first foamed layer provides the main part of the thickness of the wall panel, whereas the first and if present the second rigid layer, and preferably both first and second rigid layer, provides the rigidity of the wall panel. The first visible side, visible at the first outer surface of the wall panel, and optionally the second visible side, visible at the second outer surface of the wall panel, provides the outlook of the wall panel.

According to some embodiments, the wall panel further may comprise a second foamed polyester layer having a first and a second surface, the first surface of the second foamed layer adhering to the second surface of the second rigid layer, the second surface of the second foamed polyester layer providing an outer surface of the wall panel.

According to some embodiments, the first surface of the second foamed layer may adhere to the second surface of the second rigid layer by a glue, preferably a thermoplastic glue having a melting temperature less than the melting temperatures of the second foamed layer and the second rigid layer.

According to some embodiments, the wall panel further may comprise a second foamed polyester layer having a first and a second surface, the first surface of the second foamed layer adhering to the second surface of the first foamed layer, the second surface of the second foamed polyester layer providing an outer surface of the wall panel.

The first and second foamed layer may be different of identical one to the other. The second foamed layer may be a closed cell foam, an open cell foam or a foam comprising both open cells and closed cells.

According to some embodiments of the present invention, the second foamed layer may have a thickness in the range of 2 to 92 mm, such as in the range of 4 to 92mm. More preferred, the second foamed layer may have a thickness in the range of 4 to 40 mm.

According to some embodiments of the present invention, the second foamed layer may have a density in the range of 40 to 500 kg/m³. More preferred, the second foamed layer may have a density in the range of 40 to 350 kg/m³, most preferred in the range of 40 to 160 kg/m³.

According to some embodiments, the first surface of the second foamed layer may adhere to the second surface of the first foamed layer by a glue, preferably a thermoplastic glue having a melting temperature less than the melting temperatures of the second foamed layer and the first foamed layer.

The printed layer on the first visible side may provide the first outer surface of the wall panel.

Above the printed layer on the first visible side provided on the first surface of the at least first rigid layer, a first outer polyester layer may be proved.

Hence according to some embodiments, a wall panel may comprise a first outer polyester layer, the first outer polyester layer having a first and a second surface, the second surface of the first outer layer adhering to the first surface of the at least first rigid layer, the first printed layer being positioned between the second surface of the first outer layer and the first surface of the at least first rigid layer, the first surface of the first outer polyester layer providing the first outer surface of the wall panel.

Preferably, this first outer polyester layer is a transparent or translucent polyester layer, like a transparent or translucent polyester film or sheet.

In the context of this invention, transparent substances refer to substances through which light rays can pass. The refractive index of transparent substances is nearly uniform. Most of the light, incident on a transparent object, transmits through it. Light rays follow Snell's law of refraction. While passing through a transparent object, the amount of scattering is very less. Therefore, a clear image is seen on the other side of the substance.

In the context of this invention, translucent substances allows partial transmission of light. The light rays get scattered in the interior of such substances. Consequently, the light rays emerge in random directions. If any object is seen through a translucent substance, the image appears fuzzy or blurred. In text: first outer polyester layer applied to the printed surface.

Preferably, the second surface of the first outer layer adheres to the first surface of the first rigid layer by a transparent or translucent glue, more preferably a transparent or translucent thermoplastic glue having a melting temperature less than the melting temperatures of the at least first rigid layer and the first outer layer. Such transparent or translucent thermoplastic glue may preferably be thermoplastic polyurethane. Such transparent or translucent thermoplastic glue may also be a non-permanent glue.

Alternatively this first outer polyester layer may be a transparent or translucent polyester layer, provided by coating, such as spray coating , roller coating or painting or alike.

The first outer polyester layer is preferably provided from PET or coPET, such as rPET. The PET or co-PET may be BoPET. This first outer polyester layer may be a polyester film of foil. This first outer polyester layer may have a thickness in the range of 0.2 to 4 mm. More preferred, the first outer polyester layer may have a thickness in the range of 0,3 to 1 mm.

The printed layer on the second visible side may provide the second outer surface of the wall panel.

When applicable, above the printed layer on the second visible side provided on the second surface of the at least second rigid layer, a second outer polyester layer may be proved.

According to some embodiments, the wall panel further may comprise a second rigid polyester layer having a first and a second surface, the second surface of the first foamed layer is glued to the first surface of the second rigid layer by a glue, preferably a thermoplastic glue having a melting temperature less than the melting temperatures of the at least first foamed layer and the second rigid layer. This thermoplastic glue between the second surface of the first foamed layer and the first surface of the second rigid layer preferably is thermoplastic polyurethane. The wall panel may comprise a second visible side provided on the second surface of the at least second rigid layer and being visible at the second outer surface of the wall panel, said second visible side comprising a printed layer.

According to some embodiments, a wall panel may comprise a second outer polyester layer, the second outer polyester layer having a first and a second surface, the first surface of the second outer layer adhering to the second surface of the at least second rigid layer, the second printed layer being positioned between the first surface of the second outer layer and the second surface of the at least second rigid layer, the second surface of the second outer polyester layer providing the second outer surface of the wall panel.

Preferably, this second outer polyester layer is a transparent or translucent polyester layer, like a transparent or translucent polyester film or sheet.

Preferably, the first surface of the second outer layer adheres to the second surface of the second rigid layer by a transparent or translucent glue, more preferably a transparent or translucent thermoplastic glue having a melting temperature less than the melting temperatures of the at least second rigid layer and the second outer layer. Such transparent or translucent thermoplastic glue may preferably be thermoplastic polyurethane. Such transparent or translucent thermoplastic glue may also be a non-permanent glue.

Alternatively this second outer polyester layer may be a transparent or translucent polyester layer, provided by coating, such as spray coating , roller coating or painting or alike.

The second outer polyester layer is preferably provided from PET or coPET, such as rPET. The PET or co-PET may be BoPET. This second outer polyester layer may be a polyester film of foil. This second outer polyester layer may have a thickness in the range of 0.2 to 4 mm. More preferred, the second outer polyester layer may have a thickness in the range of 0,3 to 1 mm.

Possibly the first and second outer polyester layer are similar or identical in dimensions and/or composition.

The first and possibly the second outer layer may provide the outlook of the wall panel and may provide functionality to the outer surface of the wall panel.

The use of a non-permanent glue enables to replace the second outer layer more easily and conveniently. The use of thermoplastic glue enables to realize the adhesion of relatively thin outer layers of polyester, without damaging or discoloring the relatively thin outer layer.

The first and/or second outer layer is provided mainly to provide particular properties to the outer surface, e.g. water repellence or to provide a quickly removable or replaceable layer and/or to protect the printed layer or layers from water degeneration, washing-out or fading. The use of non-permanent or removable glues to adhere the outer layer to the rigid layer, is that the outer layer can easily be removed and replaced by another such outer layer. This in case of damage to the outer layer, like scratches and alike. On the other hand, the outer layer may cover the complete surface of the rigid layer, and hence provide no seam or loose ends, reducing the risk on peeling off.

According to some embodiments of the present invention, the first and/or second rigid polyester layer may have a thickness in the range of 0,1 to 6 mm, such as in the range of 0,75 to 6 mm. More preferred the first and/or second rigid polyester layer may have a thickness in the range of 1,5 to 3,5mm. The range 0,1 to 3,5 mm is preferred for BoPET material being used to provide the first and/or second rigid polyester layer.

When applicable, the first and second rigid polyester layer may be identical or differ from each other in thickness, density and/or composition.

According to a second, independent aspect of the present invention, a wall panel is provided, the wall panel comprising
- at least a first foamed layer of foamed polyester having a first and a second surface, and
- at least a first rigid polyester layer having a first and a second surface, the first surface of the first foamed layer is glued to the second surface of the at least first rigid layer by a glue, preferably a thermoplastic glue having a melting temperature less than the melting temperatures of the at least first foamed layer and the at least first rigid layer;
- a first visible side provided on the first surface of the at least first rigid layer and being visible at the first outer surface of the wall panel, said first visible side comprising a printed layer
wherein the first foamed layer has a thickness in the range of 2 to 92 mm, such as in the range of 4 to 92 mm, e.g. in the range of 4 to 40 mm, and/or wherein the first foamed layer has a density in the range of 40 to 500 kg/m³, such as in the range of 40 to 160kg/m³ and /or wherein the first and/or second rigid polyester layer has a thickness in the range of 0,1 to 6mm, such as in the range of 0,75 to 6mm, such as in the range of 1,5 to 3,5 mm The range 0,1 to 3,5 mm is preferred for BoPET material being used to provide the first and/or second rigid polyester layer.

The thermoplastic glue used to adhere first surface of the foamed layer to the second surface of the at least first rigid layer and/or to adhere the second surface of the second foamed layer adhering to the first surface of the second rigid layer and/or to adhere the first surface of the foamed layer to the second surface of the at least first rigid layer is preferably thermoplastic polyurethane, or at least has a melting temperature being less than the melting temperatures of the polyesters it is to adhere to. The amount of glue of the layer of thermoplastic glue may range from 100 to 55 g/m². More preferred, the amount of glue of the layer of thermoplastic glue may range from 150 to 250 g/m².

Therefore, according to embodiment of the first and/or second aspect of the invention, the thermoplastic glue may be thermoplastic polyurethane. According to embodiment of the first and/or second aspect of the invention, the thermoplastic glue may be transparent or translucent.

According to a third, independent aspect of the invention, two wall panels according to the first aspect of the invention, or two wall panels according to the second, can be coupled to the other side by side and having outer surfaces flush, i.e. coplanar.

According to embodiments of the first and/or second and/or third aspect of the invention, the wall panel has a first and a second, mutually opposed side, each of the first and second side being provided with a coupling profile, also referred to as coupling means, the first and second coupling profile form a coupling system.

In use, the two sides provided with a coupling profile are typically the longitudinal sides, i.e. the sides from top to bottom of the wall panel.

According to some embodiments, the first and second coupling profile may be identical.

Identical means that for a wall panel in a given position and orientation of its top and bottom side, the coupling profiles being at the right respectively the left side of the wall panel remain identical in orientation when the wall is turned 180° around the central longitudinal axis of the wall panel. This central longitudinal axis is parallel to the direction of the side along which the coupling profiles are provided.

According to some embodiments, the first and second coupling profile each may comprise a male part of a click coupling and a female part of a click coupling.

The male part of the first coupling profile is adapted to click into the female part of a second coupling profile of an adjacent wall panel. The male part of the second coupling profile is adapted to click into the female part of a first coupling profile of an adjacent wall panel. As such, the coupled first and second coupling profiles form a coupling by means of two click coupling means or coupling profiles and form a watertight coupling between adjacent walls.

According to some embodiments, the first and second coupling profile may have each a first side being parallel to the first outer surface of the wall panel, the first rigid polyester layer covering said coupling profile's first sides parallel to the first outer surface of the wall panel.

The first and second coupling profile have each a second side being parallel to the second outer surface of the wall panel, the second rigid polyester layer covering said coupling profiles second sides parallel to the second outer surface of the wall panel.

The outer rim of first and optionally the second rigid polyester layer is preferably flush with the outer rim of the first and second coupling profile's first and second side along the longitudinal side of the wall panel.

So the coupling profiles may be covered at both lateral sides by the first and/or the second rigid polyester layer. As such, the coupling system can be hidden in use behind the adjacent first and/or the second rigid polyester layers. The seam between adjacent wall panels can be minimal and can be made watertight easily or can even be watertight due to the coupling of the coupling system itself.

The first and second coupling means or coupling profiles may be provided as profiled sections, e.g. metallic or polymer sections.

According to some embodiments, the first and second coupling means or coupling profiles may be provided from thermoplastic polymer, preferably PET or rPET.

According to some embodiments, the first and second coupling profile or coupling means, e.g. sections, are glued to the first foamed layer by means of a thermoplastic glue, preferably TPU.

Hence this coupling system can be recycled together with the layers of the wall panel and does not need to be separated during recycling operations.

The first coupling profile, in use being provided by a first wall panel according to the invention, joins and fits with the second coupling profile, in use being provided by a second wall panel according to the invention. As such, by coupling adjacent wall panels, a complete wall may be provided wherein the adjacent walls are coupled using the coupling system. This provides a quick and easy coupling.

According to a fourth independent aspect of the invention, a section is provided, which section can be used as first and second coupling profile of a wall panel according to the third aspect of the invention.

This section, preferably a polymer section such as a polyester section, has at least one flank which can be removed, leaving the coupling function of the section, hence of the coupling profile, unaffected.

The section preferably may be provided from polyester, such as PET or coPET, optionally being rPET.

This flank, in use, is preferably parallel to the wall panel's first and a second, mutually opposed face side.

According to some embodiments, the at least one of the first and second coupling profile may have a flank which flank can be removed, leaving the coupling function of the coupling profile unaffected.

This provision of a removable flank has the benefit that, once the flank is removed, a wall panel or glass panel or any panel alike can be installed perpendicular to the plane of the wall panels. The removal from the flank leaves a slit in vertical direction.

According to a fifth, independent aspect of the invention, a wall panel according to the first, second or third aspect may comprise one or more movement prevention means for preventing the movement of two adjacent wall panels joined side-by-side, said movement being in the direction of the joining side.

The movement prevention means preferably comprising a click system, the two adjacent sides of the two wall panels according to the invention are clicked one to the other in the direction of the joining side.

The movement prevention means, preferably a click system, may fit into a tubular shaft provided by a first and a second coupling profile in coupled position. The movement prevention means is preferably comprising a click system comprising two cooperating parts, a first part being provided on or in the first coupling profile of a wall panel, the second part being provided on or in the second coupling profile of a wall panel.

Any click system may be used. Preferred are click systems having a male and female part cooperating to prevent a movement.

The movement prevention means may be the click system MultiClip from Hettich (DE). The two parts of the click system may be integrated and cooperate in a void space present between the first and second coupling means or coupling profiles once coupled.

The movement prevention means preferably are provided from polyester, such as PET or coPET, optionally being rPET.

Hence this movement prevention means can be recycled together with the layers or parts of the wall panel and does not need to be separated during recycling operations.

The wall panels provided with such movement prevention means may form a stable wall, in which the individual wall panels may not move in a direction parallel to the wall.

According to a sixth aspect of the invention, wall panels according to the first and/or second and/or third and/or fifth aspect are used to provide a wall.

In particular the wall panels are used to provide walls in humid or wet environments and places, such as kitchens, bathrooms, swimming pools and alike.

Hence according the sixth aspect of the invention a wallboard according to any one of the preceding aspects may be used as part of a wall of a humid or wet place.

The wall panels are used to provide prefab bathrooms or in-situ assembled prefab bathrooms.

According to a seventh aspect of the invention, a method to provide a wall panel according to the first or second aspect of the invention is provided, said method comprises the steps of
- providing a first foamed layer of foamed polyester having a first and a second surface, and
- providing a first rigid polyester layer having a first and a second surface,
- providing on the first surface of the at least first rigid layer a printed layer
- adhering the first surface of the at least first foamed layer to the second surface of the at least first rigid layer by a glue, preferably a thermoplastic glue having a melting temperature less than the melting temperatures of the at least first foamed layer and the at least first rigid layer;
thereby providing a wall panel having a first visible side being visible at the first outer surface of the wall panel, said first visible side comprising the printed layer.

The method further may comprise the step of providing a first outer polyester layer, the first outer polyester layer having a first and a second surface, and adhering the second surface of the first outer layer adhering to the first surface of the at least first rigid layer, the first printed layer being positioned between the second surface of the first outer layer and the first surface of the at least first rigid layer, the first surface of the first outer polyester layer providing the first outer surface of the wall panel.

The method further may comprise the steps of providing a second rigid polyester layer having a first and a second surface, and adhering the second surface of the at least first foamed layer to the first surface of the at least second rigid layer by a glue, preferably a thermoplastic glue having a melting temperature less than the melting temperatures of the at least first foamed layer and the at least first rigid layer.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief Description of the Drawings

Figure 1 is a schematically view of a wall panel according to the invention.
Figure 2 is a schematically view of an alternative wall panel according to the invention.
Figure 3 is a schematically view of coupling profile from a coupling system being part of a wall panel according to the invention.
Figure 4 is a schematically view of four possible connections of two wall panels according to the invention provided and coupled by means of a coupling profile from a coupling system being part of a wall panel according to the invention.
Figure 5 is a schematically view of two wall panels according to the invention provided with a movement prevention means.

The same reference signs refer to the same, similar or analogous elements in the different figures.

### Detailed Description of Embodiment(s)

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

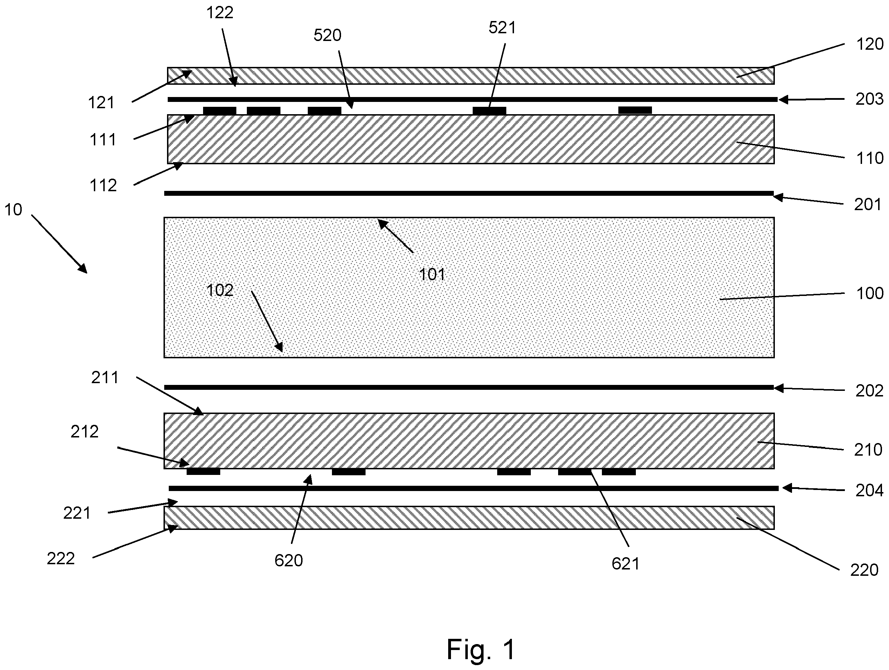

A wall panel 10 according to the present invention is schematically shown in figure 1. The wall panel 10 comprises a first foamed layer 100 of foamed polyester, being rPET. This first foamed layer 100 has a first 101 and a second 102 surface. The thickness of this first closed cell foamed layer 100 is about 34mm. The thickness is the distance between the first 101 and second 102 surface. The density of this first closed cell foamed layer 100 is about 100 g/m³.

The wall panel 10 further comprises a first rigid polyester layer 110 having a first 111 and a second 112 surface. The first rigid polyester layer 110 is an rPET layer having a density of more than 1000 kg/m³ and a thickness of about 3mm. The first surface 101 of the first foamed layer 100 is glued to the second surface 112 of the first rigid layer 110 by a thermoplastic glue 201. About 200g/m² of thermoplastic polyurethane adhesive is applied to provide this glue layer. This thermoplastic polyurethane adhesive obviously has a melting temperature well below the melting temperature of the polyesters it is to connect. On the first surface 111 of the first rigid layer 110, a first visible side 520 is provided, which visible side 520 comprises a printed layer, in figure 1 represented by cured ink pixels 521 spread on the first surface 111 of the first rigid layer 110. The printed layer is provided by printing a solvent based ink directly on the first surface 111 of the first rigid layer 110 using digital printing.

The wall panel 10 further comprises a first outer polyester layer 120, more precise a transparent PET layer, having a first 121 and a second surface 122, the second surface 122 of the first outer layer 120 adhering to the first surface 111 of the first rigid layer 110, the first surface 121 of the first outer polyester layer 120 providing the first outer surface of the wall panel 10. The thickness of this first outer polyester layer 120 is about 0.6mm. The second surface 122 of the first outer layer 120 adhering to the first surface 111 of the first rigid layer 110 by a layer of transparent thermoplastic polyurethane glue, applied with an amount of about 200 g/m².

As shown in figure 1, the wall panel 10 further comprises a second rigid polyester layer 210 having a first 211 and a second 212 surface. The second surface 102 of the first foamed layer 100 is glued to the first surface 211 of the second rigid layer by a thermoplastic glue 202. The same glue and the same amount is applied as for the adhesion of the first foamed layer 100 and the first rigid layer 110. The second rigid polyester layer 210 is identical the first rigid polyester layer 110. On the second surface 212 of the second rigid layer 210, a second visible side 620 is provided, which visible side 620 comprises a printed layer, in figure 1 represented by cured ink pixels 621 spread on the second surface 212 of the second rigid layer 210. The printed layer is provided by printing a solvent based ink directly on the second surface 212 of the second rigid layer 210 using digital printing techniques.

The wall panel 10 further comprises a second outer polyester layer 220 having a first 221 and a second 222 surface, the first surface 221 of the second outer layer adhering to the second surface 212 of the second rigid layer 210. The second surface 222 of the second outer polyester layer 220 provides the second outer surface of the wall panel 10. This second outer polyester layer 220 is applied to the rigid layer 210 in the same way as the adhesion of the first outer layer 120 and the first rigid layer 110. The second outer polyester layer 220 is identical to the first outer layer.

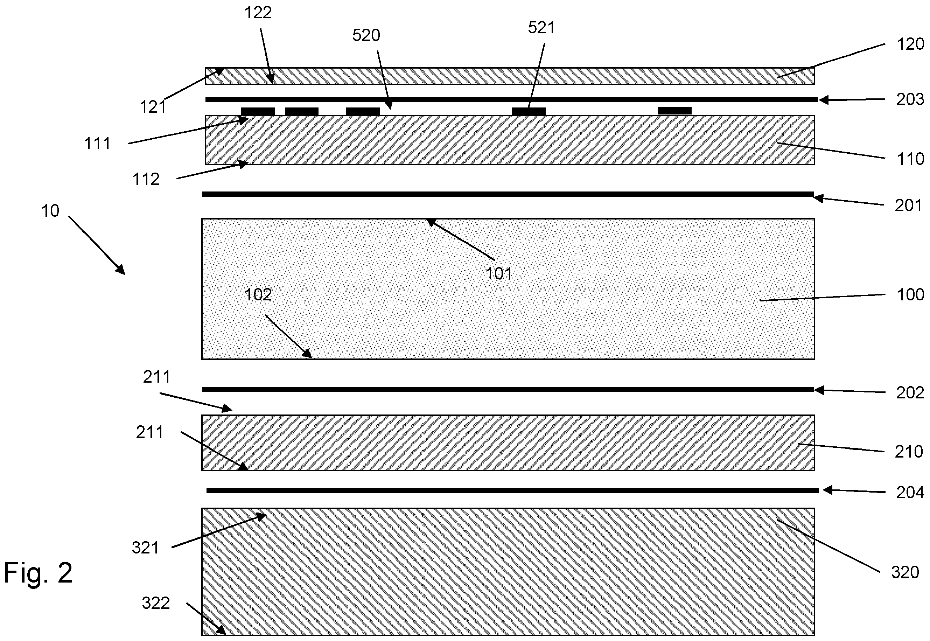

An alternative embodiment of a wall panel 11 according to the present invention is shown in figure 2. The wall panel 11 is almost identical to the wall panel 10 of figure 1. The wall panel 11 does not comprise a second outer polyester layer but comprises instead a second foamed polyester layer 320 having a first 321 and a second 322 surface. The first surface 321 of this second foamed layer 320 adheres with thermoplastic polyurethane glue to the second surface 212 of the second rigid layer 210. Again about 200g/m² of this glue or adhesive is applied. The second surface 322 of the second foamed polyester layer provides an outer surface of the wall panel.

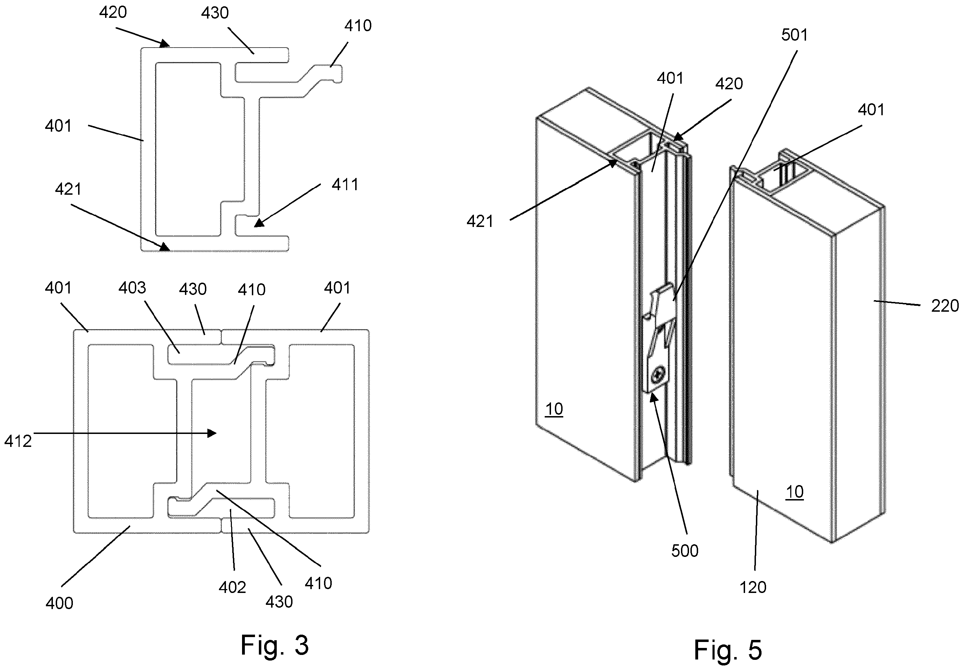

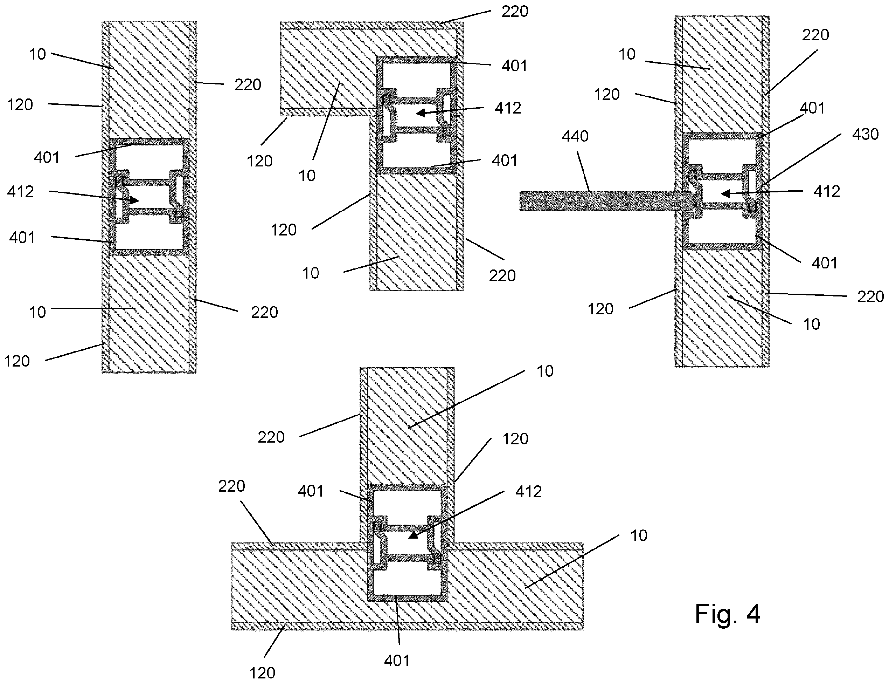

Turning to figure 3, a radial cross section of a polyester (such as rPET) coupling system 400 and a profile 401 of such coupling system is provided. The coupling system comprises two identical profiles 401, which may couple to each other. As shown in figure 4, at each side 240 of the wall panel, in figure 4 as an example wall panel 10, such coupling profile 401 is provided. Two wall panels 10 may couple to each other in a direction as is dependent on the orientation of the coupling profiles 401 according to which the coupling profiles 401 are adhered to the sides 240.

Each coupling section comprises two click systems 402 and 403, one at each side of the profile. A male part 410 of a click system is provided at one side of the profile 401, a corresponding female part 411 is provided at the other side of the profile 401.

When two profiles 401 are coupled and forming a coupling system 400, the two click systems are coupled and a void space 412 is created between the two profiles.

The first and second coupling profile 401 have each a first side 420 being parallel to the first outer surface of the wall panel 10. One of the first or second rigid polyester layer 120, 220 covering this coupling profile's first sides parallel to the first outer surface of the wall panel. The first and second coupling profile 401 have each a second side 421 being parallel to the second outer surface of the wall panel 10. One of the first or second rigid polyester layer 120, 220 covering this coupling profiles second sides parallel to the first outer surface of the wall panel. When coupling the coupling system 400, the two coupling profiles 401 will be hidden by these first and second outer surfaces of the wall panels. As such a hidden connection between two adjacent wall panels may be obtained.

The coupling profile 401 has a flank 430 which flank can be removed, leaving the coupling function of the coupling profile unaffected. This is shown in figure 4, in the embodiment where this flank 430 is substantially completely removed to allow a glass panel 440 to be mount under an angle of 90° to the wall formed by the wall panels 10.

In figure 5, one element 501 of a movement prevention means 500 is shown, this movement prevention means preventing the movement in the direction of the joining side of two adjacent wall panels 10 joined side-by-side. The two parts 501, one of which is shown in figure 5, are located in the void 412 of two coupling profiles 401. The two parts 501 click into each other by first positioning the adjacent walls side by side and moving down one wall part in view of the other. once clicked, the movement in direction parallel to the sides of the wall panels is prevented. The movement prevention means may be the click system MultiClip from Hettich (DE).

The wall panels according to the invention of which examples are shown in the figures, have the advantage that they may be provided fully recyclable and are waterproof. Hence they are adapted to be used to provide wat rooms such as bathrooms and showers and alike.

It is to be understood that although preferred embodiments and/or materials have been discussed for providing embodiments according to the present invention, various modifications or changes may be made without departing from the scope and spirit of this invention.

## Claims

1. A wall panel (10) comprising
• at least a first foamed layer (100) of foamed polyester having a first (101) and a second (102) surface, and
• at least a first rigid polyester layer (110) having a first (111) and a second (112) surface, the first surface (101) of the at least first foamed layer is glued to the second surface (112) of the at least first rigid layer by a thermoplastic glue (201) having a melting temperature less than the melting temperatures of the at least first foamed layer and the at least first rigid layer, and
• a first visible side (520) provided on the first surface (111) of the at least first rigid layer and being visible at the first outer surface of the wall panel, said first visible side comprising a printed layer.

2. A wall panel according to claim 1, wherein said thermoplastic glue between the first surface (101) of the at least first foamed layer and the second surface (112) of the at least first rigid layer is thermoplastic polyurethane.

3. A wall panel according to any one of the claims 1 to 2, wherein a first outer polyester layer (120) is provided, the first outer polyester layer (120) having a first (121) and a second surface (122), the second surface (122) of the first outer layer adhering to the first surface (111) of the at least first rigid layer, the first printed layer being positioned between the second surface (122) of the first outer layer and the first surface (111) of the at least first rigid layer, the first surface (121) of the first outer polyester layer providing the first outer surface of the wall panel.

4. A wall panel according to claim 3, wherein first outer polyester layer (120) is a transparent or translucent polyester layer.

5. A wall panel according to any one of the claims 3 to 4, wherein the second surface of the first outer layer adheres to the first surface of the first rigid layer by a transparent or translucent thermoplastic glue having a melting temperature less than the melting temperatures of the at least first rigid layer and the first outer layer.

6. A wall panel according to claim 5, wherein said thermoplastic glue between the second surface of the first outer layer and the first surface of the first rigid layer is thermoplastic polyurethane.

7. A wall panel according to any one of the claims 3 to 6, wherein the second surface (122) of the first outer layer adhering to the first surface (111) of the first rigid layer by a non-permanent glue.

8. A wall panel according to any one of the preceding claims , wherein said wall panel further comprises a second rigid polyester layer (210) having a first (211) and a second (212) surface, the second surface (102) of the first foamed layer is glued to the first surface (211) of the second rigid layer by a thermoplastic glue (202) having a melting temperature less than the melting temperatures of the at least first foamed layer and the second rigid layer.

9. A wall panel according to claim 8, wherein said thermoplastic glue between the second surface (102) of the first foamed layer and the first surface (211) of the second rigid layer is thermoplastic polyurethane.

10. A wall panel according to any one of the claims 8 to 9, wherein the wall panel comprises a second visible side (620) provided on the second surface of the at least second rigid layer and being visible at the second outer surface of the wall panel, said second visible side comprising a printed layer.

11. A wall panel according to claim 10, wherein said wall panel further comprises a second outer polyester layer (220) having a first (221) and a second (222) surface, the first surface (221) of the second outer layer adheres to the second surface (212) of the second rigid layer, the second printed layer being positioned between the first surface (221) of the second outer layer (220) and the second surface (212) of the at least second rigid layer (210), the second surface (222) of the second outer polyester layer providing an outer surface of the wall panel.

12. A wall panel according to claim 11, wherein second outer polyester layer (220) is a transparent or translucent polyester layer.

13. A wall panel according to any one of the claims 11 to 12, wherein the first surface (221) of the second outer layer adheres to the second surface (212) of the second rigid layer by a transparent or translucent thermoplastic glue having a melting temperature less than the melting temperatures of the at least second rigid layer and the second outer layer.

14. A wall panel according to claim 13, wherein said thermoplastic glue between first surface (221) of the second outer layer and the second surface (212) of the second rigid layer is thermoplastic polyurethane.

15. A method to provide a wall panel according to any one of the preceding claims, said method comprises the steps of
• providing a first foamed layer of foamed polyester having a first and a second surface, and
• providing a first rigid polyester layer having a first and a second surface,
• providing on the first surface of the at least first rigid layer a printed layer
• adhering the first surface of the at least first foamed layer to the second surface of the at least first rigid layer by a glue, preferably a thermoplastic glue having a melting temperature less than the melting temperatures of the at least first foamed layer and the at least first rigid layer;
thereby providing a wall panel having a first visible side being visible at the first outer surface of the wall panel, said first visible side comprising the printed layer.

16. The use of a wall board according to any one of the preceding claims, as part of a wall of a humid or wet place.
